# EUROPÄISCHE PATENTANMELDUNG

(11) **EP 3 708 472 A1**
(43) Veröffentlichungstag der Anmeldung: **16.09.2020**
(21) Anmeldenummer: 20162729.6
(22) Anmeldetag: 12.03.2020
(51) Int. Cl.: B62D 55/20, B62D 55/21

(54) **KETTENLAUFWERK**

(30) Priorität: 13.03.2019 DE 202019001168 U
(71) Anmelder: Street-Rubbers GmbH & Co. KG, 87640 Biessenhofen (DE)
(72) Erfinder: Burkhardt, Johann, 87640 Biessenhofen (DE); Leinsle, Xaver, 87640 Biessenhofen (DE)
(74) Vertreter: Wiese, Gerhard

(57) **Zusammenfassung**

Die Erfindung betrifft ein Kettenlaufwerk mit einer Vielzahl von plattenförmigen Kettensegmenten (1a), die an Achsbolzen (2) mit seitlich angeordneten Endverbindern (3) gekoppelt sind. Für eine einfache straßentaugliche Umrüstung eines derartigen Kettenlaufwerks ist erfindungsgemäß vorgesehen, dass im Mittelbereich der Kettensegmente (1a) jeweils eine Führungsplatte (4) befestigt ist.

## Beschreibung

Die vorliegende Erfindung betrifft ein Kettenlaufwerk gemäß dem Oberbegriff des Anspruchs 1.

### STAND DER TECHNIK

Derartige Kettenlaufwerke (oft auch als Gleisketten oder Raupenfahrwerk bezeichnet) werden bei schweren Fahrzeugen (z. B. Baggern) eingesetzt, insbesondere im unbefestigten Gelände. Solche Gleisketten werden unter diesem Schlagwort in WI-KIPEDIA gezeigt und beschrieben, insbesondere für Baumaschinen oder auch Militärfahrzeuge. Am Beispiel des Leopard-Panzers wird eine Gleiskette mit sogenannten Endverbindern veranschaulicht. Hierbei sind die einzelnen Kettensegmente (oft mit Gummipolstern) an seitlich abstehenden Achsen randseitig mit schlaufenartigen Ösen verbunden. Somit werden pro Kettenelement zwei Gelenke gebildet, wobei zusätzlich auch Mittelverbinder vorgesehen sein können (wie in der DE 195 09 47 A1 beschrieben). Hierdurch wird das Abrollverhalten verbessert. Ähnliche Panzerketten werden in der EP 0 044 137 A1 oder der EP 2 045 177 A1 beschrieben, da diese Ketten-Bauart bei vielen Panzern verwendet wird. Die für höhere Fahrgeschwindigkeit erforderliche Elastizität der Raupenkette wird hierbei durch gummigelagerte Bolzen innerhalb der Kettenelemente erzielt, wie z. B. im US-Patent 2,433,409 oder der DE 198 20 175 grundsätzlich gezeigt ist.

Diese Bauweise besitzt jedoch beim rauen Militäreinsatz einen sehr hohen Verschleiß, insbesondere an den Mittelzähnen, so dass diese Panzerketten nach kurzer Zeit "ausgesondert" werden und relativ preiswert in den freien Verkauf kommen. Ein Einsatz dieser meist nur an den Mittelzähnen verschlissenen Ketten bei Baumaschinen oder Forstmaschinen (sog. Harvester, wie z. B. in der DE 10 2012 105 550 beschrieben) ist jedoch kaum möglich, allenfalls mit einem erheblichen Umbauaufwand, um das Kettenlaufwerk straßentauglich zu gestalten.

Daher liegt der Erfindung die Aufgabe zugrunde, bei einem derartigen Kettenlaufwerk die Umrüstung und Montage zu vereinfachen.

### OFFENBARUNG DER ERFINDUNG

Diese Aufgabe wird gelöst mit den Merkmalen des Anspruches 1. Vorteilhafte Ausgestaltungen sind Gegenstand der Unteransprüche.

Bei der vorliegenden Erfindung wird ein Kettenlaufwerk, insbesondere eine Panzerkette, mit seitlichen Achsbolzen und randseitig angeordneten Endverbindern verwendet, jedoch ohne die sonst üblichen Mittelzähne. An deren Stelle, also in der Mittellängsebene des Kettenlaufwerks (Gleiskette), wird an den plattenförmigen Kettensegmenten nunmehr eine Vielzahl von Führungsplatten angeordnet.

Die Führungsplatten sind dabei besonders vorteilhaft direkt auf die Kettensegmente aufgeschweißt.

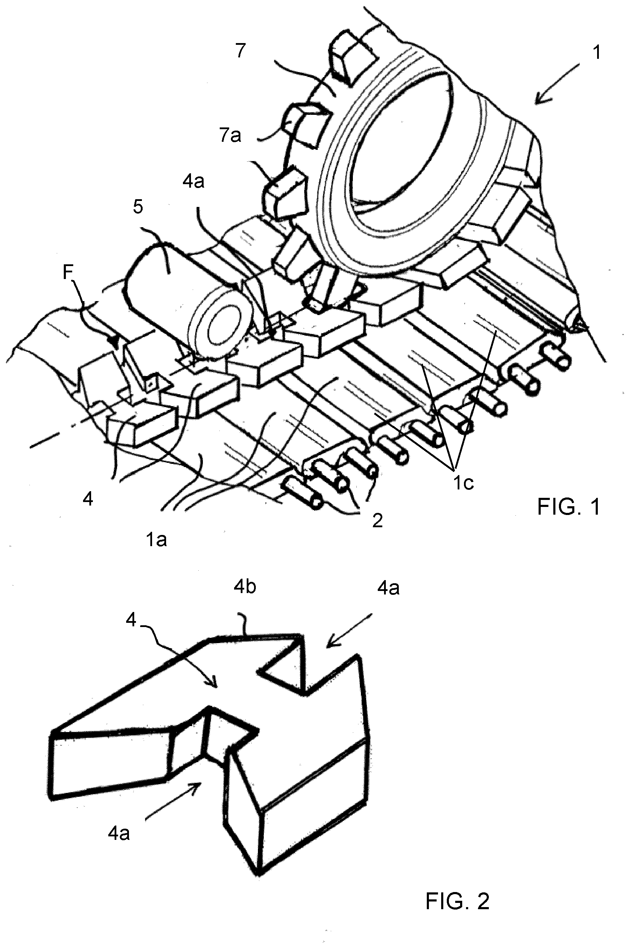

Die Führungsplatten sind bevorzugt doppelpfeilförmig ausgebildet und mit einen geringen Fugenspalt zueinander positioniert, insbesondere nahe zu den Achsbolzen, so dass die Gleiskette trotz des jeweiligen Spalts zwischen benachbarten Führungsplatten einen ruhigen Lauf beim Abrollen auf den Antriebsritzeln (Antriebsturas) und den meist mehreren Tragrollen besitzt. Als "doppelpfeilförmig" wird eine Form bezeichnet, die prinzipiell in der Draufsicht dem Buchstaben "H" entspricht, wobei die vertikalen Elemente des "H" unten und oben jeweils abgeschrägte, nach innen ansteigende Flanken aufweisen, wie dies insbesondere aus Fig. 2 gut zu erkennen ist.

Die Tragrollen weisen bevorzugt an beiden Stirnflächen Führungsringe auf, die einen größeren Durchmesser als die Tragrollen selbst in ihrem mittleren Bereich aufweisen, so dass die Führungsplatten an ihren seitlichen Kanten exakt geführt sind. Hierdurch ergibt sich eine belastbare Seitenführung für die umlaufende Raupenkette.

Zudem können die aneinandergereihten Führungsplatten in ihrem mittleren Bereich jeweils Taschen aufweisen, in die Antriebszähne eines Ritzels in Mittellängsebene des Kettenlaufwerks eingreifen. Aufgrund der stabilen Verankerung der Führungsplatten reicht hierbei meist ein Antriebsritzel (Tura) aus, was den Bauaufwand gegenüber einem Doppel-Antriebsritzel vermindert, aber auch den Verschleiß an den Endverbindern, der bei vielen Panzerketten-Bauarten durch den reibungsintensiven Angriff der Doppel-Ritzel an den Endverbindern und Torsionsbelastung der Kettenschuhe verursacht wird.

Die einzelnen Führungsplatten werden bevorzugt durch Laserschneiden aus einer Stahlplatte bzw. einem Stahlband hergestellt, wobei die weitgehende H-Form inklusive der Doppelpfeilform mit ausreichender Genauigkeit gefertigt werden kann.

Die Tragrollen entsprechen in ihrer Länge in etwa der Breite der Führungsplatten und sind an Konsolen an einem stabilen Tragbalken oder Horizontalholm des jeweiligen Raupenschiffs befestigt. Dabei können die Führungsringe ggf. auch getrennt von den Tragrollen direkt an den Konsolen gelagert sein. Durch diese Seitenführung wird ein nahezu reibungsfreier Eingriff der Antriebszähne in die Taschen der Führungsplatten erzielt und damit eine geringe Verschleißbelastung. Zudem können Ablagerungen (z. B. Sand) auf den meist sehr breiten Kettensegmenten des Untertrums durch die Taschen in den Führungsplatten und zwischen den Kettensegmenten hindurch fallen, so dass eine weitere Verschleißquelle minimiert wird.

Die Kettensegmente ("Kettenschuhe") weisen bevorzugt Polsterelemente auf Kunststoffbasis auf, damit die damit ausgerüstete Arbeitsmaschine (Bagger, Forstmaschine) unter Nutzung von asphaltierten Straßen schnell den Einsatzort wechseln kann, also für die Straßenfahrt keinen Tieflader benötigt. Zur einfachen Montage des Kettenlaufwerks kann die Gleiskette an den randseitigen Endverbindern leicht geteilt werden und ist damit gut zugänglich.

### KURZE BESCHREIBUNG DER ZEICHNUNGEN

Nachstehend wird die Erfindung anhand der Zeichnung näher erläutert. Hierbei zeigen:
- Fig. 1: eine schematische Perspektivansicht auf eine Raupenkette,,
- Fig. 2: eine perspektivische Darstellung einer neuerungsgemäßen Führungsplatte,
- Fig. 3: eine Draufsicht auf einen Teil (Untertrum) des Kettenlaufwerks, und
- Fig. 4: eine Seitenansicht gemäß Fig. 3.

### AUSFÜHRUNGSFORMEN DER ERFINDUNG

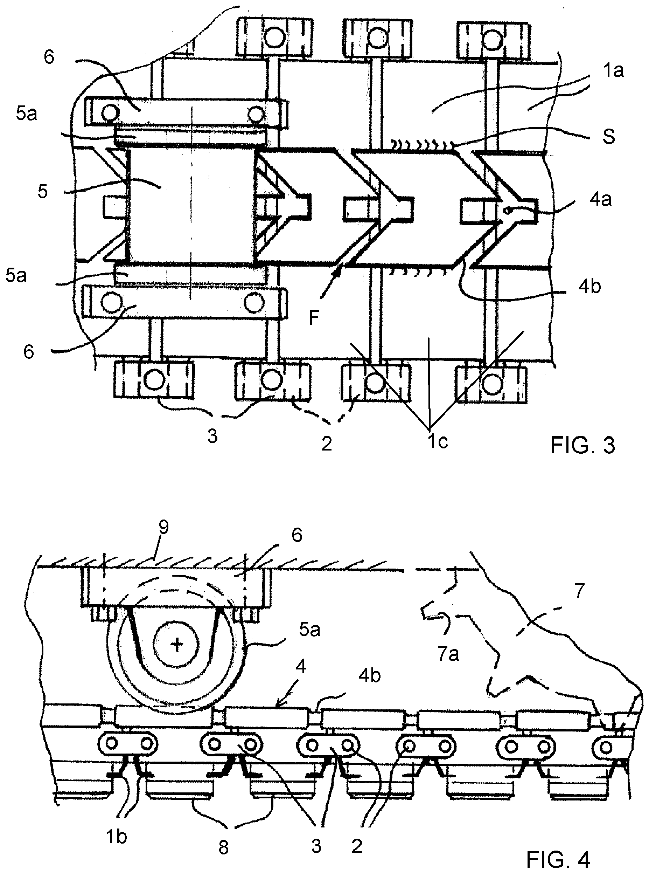

In Fig. 1 ist ein Bereich eines Kettenlaufwerks 1 mit einer Raupenkette dargestellt, wobei je zwei benachbarte Kettenschuhe bzw. Kettensegmente 1a seitlich durch randseitige Endverbinder 3 miteinander gekoppelt werden (vgl. Fig. 3 und 4). Jedes Kettensegment 1a besitzt eine etwa rechteckige Tragplatte 1c, auf der mittels Steckaufnahmen 1b Kunststoff-Polster 8 befestigt sein können (vgl. Fig. 4), und vier Achsbolzen 2, die jeweils im Eckbereich befestigt sind, insbesondere an die Tragplatte 1c angeschweißt sind. Je zwei randseitig benachbarte Achsbolzen 2 sind durch einen Endverbinder 3 gekoppelt, wie in Fig. 3 und 4 gezeigt. Die Endverbinder 3 und die damit umgriffenen Achsbolzen 2 benachbarter Kettensegmente 1a bilden somit einen stabilen Verbund.

Im mittleren Bereich der plattenförmigen Kettensegmente 1a (Mittellängsebene) ist hier je eine flache Führungsplatte 4 befestigt ist, insbesondere am Kettensegment 1a mit je einem Fugenspalt F aufgeschweißt ist. Dieser schmale Fugenspalt F ermöglicht eine Anpassung an den Untergrund und das Abrollen der Kette über das Antriebsritzel 7 bzw. den Eingriff der Antriebszähne 7a.

Die jeweilige Führungsplatte 4 weist eine Doppelpfeilform auf, so dass aufeinander folgende Führungsplatten 4 in Seitenansicht überlappend angeordnet sind (vgl. Fig. 3 und 4), da deren Flanken 4b zur Ketten-Laufrichtung schräg ausgerichtet sind, hier um etwa 45°. Hierdurch wird ein sanftes Abrollen des Kettenlaufwerks 1 über wenigstens eine hier schematisch gezeichnete Tragrolle 5 erzielt, die in Fig. 3 und 4 näher dargestellt ist.

In Fig. 2 ist eine der Führungsplatten 4 perspektivisch gezeigt, wobei insbesondere die mittigen Ausschnitte zur Bildung einer Tasche 4a und die schräg verlaufenden Flanken 4b ersichtlich sind, welche den Fugenspalt F begrenzen. Die Führungsplatte 4 wird durch Brenn- oder Laserschneiden aus gut schweißbarem Stahlblech hergestellt, insbesondere in der dargestellten pfeilförmigen H-Form, um dann im Mittelbereich des jeweiligen Kettensegments 1a mit wenigstens einer Schweißnaht (S in Fig. 3) befestigt zu werden. Die Dicke der Führungsplatte 4 entspricht dabei in etwa der Dicke der Kettensegmente 1a und die Breite der Führungsplatte 4 in etwa der Länge der Tragrolle 5, wobei diese zur Seitenführung an ihren Stirnseiten bevorzugt gegenüber dem Durchmesser der Tragrollen 5 in deren mittleren Bereich durchmessergrößere Führungsringe 5a aufweist.

In Fig. 3 ist ein Teil des Kettenlaufwerks 1 in Draufsicht gezeigt, wobei im hier linken Bereich die Tragrolle 5 an seitlichen Konsolen 6 befestigt ist. Unter der Tragrolle 5 (von ggf. mehreren derartigen Rollen) laufen die Führungsplatten 4 hindurch und führen dabei das gesamte Kettenlaufwerk 1 in seitlicher Richtung, insbesondere an den entsprechend angepassten Führungsringen 5a. Wie ersichtlich, überlappen sich - in Seitenansicht gemäß Fig. 4 gesehen - die Führungsplatten 4 beim Abrollen an der Tragrolle 5 gegenseitig, so dass ein komfortabler Betrieb ermöglicht wird. Durch die exakte Seitenführung können die Zähne 7a des Antriebsritzels 7 (vgl. Fig. 1 und 4) auch nahezu reibungslos in die Taschen 4a eingreifen, die von den rechteckigen Aussparungen zweier benachbarter Führungsplatten 4 (siehe Figuren 1 und 3) gebildet werden.

In Fig. 4 ist eine Seitenansicht auf das Kettenlaufwerk 1 gemäß Fig. 3 gezeigt, insbesondere der Eingriff des Antriebsritzels 7 und die Anordnung der Konsolen 6 an einem hier nach oben hin schraffierten Holm 9. Weiterhin ist die Überlappung der aufeinander folgenden Führungsplatten 4 (aufgrund der schräg verlaufenden Flanken 4b) erkennbar, so dass ein ruhiger Ketten-Lauf erzielt wird, zumal bevorzugt die Kettensegmente 1a an ihrer Unterseite auch Steckaufnahmen 1b für Kunststoff-Polster 8 aufweisen. Somit wird das Kettenlaufwerk 1 straßentauglich und bietet einen hohen Abrollkomfort.

Aufgrund der vorgeschlagenen Führungsplatten 4 mit Doppelpfeilform ist eine einfache Umrüstung der sog. Panzerketten auf Arbeitsmaschinen im Bau- oder Forstbereich möglich. Zudem wird eine leichte Montage bzw. Demontierbarkeit der Kette erzielt. Ein Anheben des Fahrzeugs ist aufgrund der guten Zugänglichkeit nicht erforderlich. Zudem wird die Unfallgefahr bei der Ketten-Montage am Fahrzeug vermindert. Bei einer Beschädigung einzelner Kettensegmente können diese bei Bedarf auch direkt am Fahrzeug ausgetauscht werden.

### BEZUGSZEICHENLISTE

- 1: Ketten laufwerk
- 1a: Kettenschuh (Kettensegment)
- 1b: Steckaufnahme
- 1c: Tragplatte
- 2: Achsbolzen
- 3: Endverbinder
- 4: Führungsplatte
- 4a: Tasche (an 4)
- 4b: Flanke (von 4)
- 5: Tragrolle
- 5a: Führungsring (an 5)
- 6: Konsole
- 7: Antriebsritzel
- 7a: Antriebszahn
- 8: Kunststoffpolster
- 9: Holm

- F: Fugenspalt
- S: Schweißnaht (Fig. 3)

## Patentansprüche

1. Kettenlaufwerk mit einer Vielzahl von plattenförmigen Kettensegmenten (1a), die an Achsbolzen (2) mit seitlich angeordneten Endverbindern (3) gekoppelt sind, **dadurch gekennzeichnet, dass** im Mittelbereich der Kettensegmente (1a) jeweils eine Führungsplatte (4) befestigt ist.

2. Kettenlaufwerk nach Anspruch 1, **dadurch gekennzeichnet, dass** die Führungsplatte (4) unter Bildung eines Fugenspalts (F) mittels wenigstens einer Schweißnaht (S) auf das Kettensegment (1a) aufgeschweißt ist.

3. Kettenlaufwerk nach Anspruch 1 oder 2, **dadurch gekennzeichnet, dass** die Führungsplatte (4) jeweils eine Doppelpfeilform mit schräg verlaufenden Flanken (4b) aufweist, wobei aufeinander folgende Führungsplatten (4) in Seitenansicht gesehen in Teilbereichen überlappend angeordnet sind.

4. Kettenlaufwerk nach einem der Ansprüche 1 bis 3, **dadurch gekennzeichnet, dass** wenigstens eine Tragrolle (5) vorgesehen ist, deren Länge jeweils der Breite der Führungsplatte (4) entspricht.

5. Kettenlaufwerk nach Anspruch 4, **dadurch gekennzeichnet, dass** die Tragrolle (5) an beiden Stirnseiten durchmessergrößere Führungsringe (5a) aufweist.

6. Kettenlaufwerk nach Anspruch 4 oder 5, **dadurch gekennzeichnet, dass** die Tragrolle (5) an seitlichen Konsolen (6) befestigt ist.

7. Kettenlaufwerk nach einem der Ansprüche 1 bis 6, **dadurch gekennzeichnet, dass** jeweils zwei Führungsplatten (4) zwischen sich im mittleren Bereich eine Tasche (4a) zum Eingriff eines Antriebsritzels (7) bilden.

8. Kettenlaufwerk nach einem der Ansprüche 1 bis 7, **dadurch gekennzeichnet, dass** die Führungsplatten (4) durch Brenn- oder Laserschneiden hergestellt sind.

9. Kettenlaufwerk nach Anspruch 8, **dadurch gekennzeichnet, dass** die Führungsplatten (4) eine pfeilförmige H-Form aufweisen.

10. Kettenlaufwerk nach einem der Ansprüche 1 bis 9, **dadurch gekennzeichnet, dass** die Kettensegmente (1a) Steckaufnahmen (1b) für Kunststoff-Polster (8) aufweisen.

11. Kettenlaufwerk nach einem der Ansprüche 1 bis 10, **dadurch gekennzeichnet, dass** die Dicke der Führungsplatte (4) in etwa der Dicke der Kettensegmente (1a) entspricht.
